Europäisches Patentamt

(19) European Patent Office
Office européen des brevets

(11) Publication number: **0 028 434**
**A1**

## (12) EUROPEAN PATENT APPLICATION

(21) Application number: 80201032.2

(22) Date of filing: 30.10.80

(51) Int. Cl.³: **B 62 B 1/12**
**B 62 B 3/02**

(30) Priority: 30.10.79 NL 7907958

(43) Date of publication of application:
13.05.81 Bulletin 81/19

(84) Designated Contracting States:
AT BE CH DE FR GB IT LI LU NL SE

(71) Applicant: De Wijn, Jacques Adriaan
Willem Alexanderdreef 28
NL-3871 CL Hoevelaken(NL)

(72) Inventor: De Wijn, Jacques Adriaan
Willem Alexanderdreef 28
NL-3871 CL Hoevelaken(NL)

(74) Representative: Morel, Christiaan F., Dr.Ir.
MORELPATENT Laarstraat 3
NL-8166 GR Emst (Epe)(NL)

(54) Cart, undercarriage with foldable wheels.

(57) Cart, undercarriage for a baby-coach or such-like, comprising two support members (43, 44) each with one or two wheels (49, 50) fixed to it and of which the support members (43, 44) can pivot around an axis (54) such that the cart can be folded together in a little area.

Fig.6

Croydon Printing Company Ltd

- 1 -

Title: Cart, undercarriage with foldable wheels.

The invention relates to a cart, baby-carriage or -coach, baby undercarriage and such-like, which comprises a frame and two or more wheels.

Well known are carriages, baby-carriages and such-like. The transport by car of for example baby-carriages causses more than once problems originated in the great dimensions of such carriages. For this reason there are baby-carriages on the market which can be entirely dismounted. The disadvantage of this known dismountable babycarriages is that the components have to be taken apart and then still they need a lott of space; and if the components are detached it always causes much troubles to mount the components together.

The aim of the invention is a cart, a baby-crriage or undercarriage of which the wheels can be folded in a easy way.

According to the invention this purpose is reached with a cart by that the wheels can be unfolded or folded underneath and that connecting means can keep the wheels in one or more preferred positions, and that in the unfolded position the axis of rotation of two wheels are in line and that support-members connect the axle of the two wheels to the frame and that each of the support members together with the wheel can pivot around an axis, which is in an plane close to the plane of rotation of the wheel and that in the folded position of one of the wheels the other wheel can be folded over the first  wheel towards the folded position such that the support member of one of the wheels stays outside the circumference of the other wheel and the support member of the the wheels folded underneath.

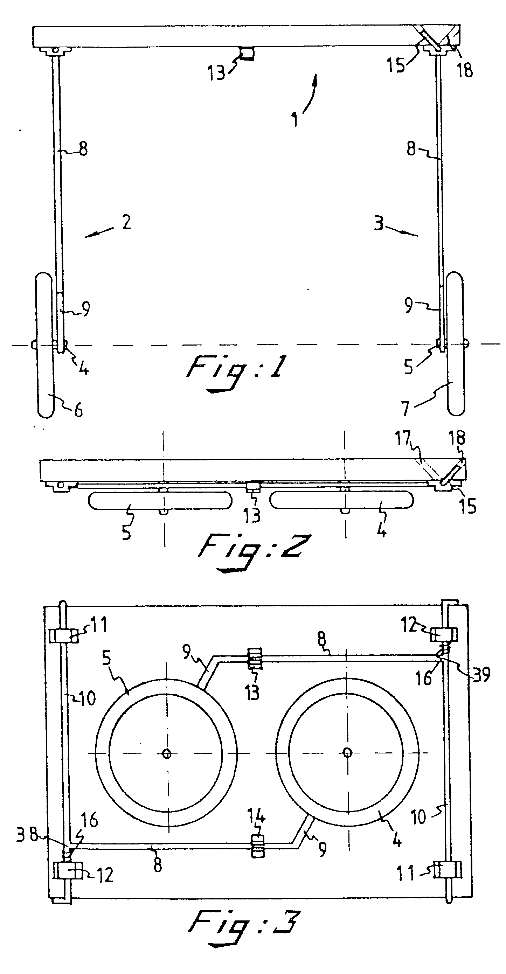

Figures 1, 2 and 3 show a possible embodiment of a cart according to the invention. The cart comprises a frame 1, to which by means of supporting members 2, 3 are connected the axles 4, 5 of two wheels 6, 7. The axles 4 and 5 of the two wheels are in line if in the unfolded position (Figure 1). In this embodiment of the cart according to the invention the supporting members consist of two parts, a bar (or rod) 8 and a rod (or bar) 9. The bar 8 and the rod 9 are near one end fixed together under an angle. At the other end of the rod 9 is connected to it the axle 4, 5 of one of the wheels 6, 7. To the other end of the bar 8 at a right angle is connected a tube (or bar) 10, which is pivotably connected to the frame 1 by means of supports or bearings; in this embodiment the frame exists of a board. By means of clamps 13, 15 the wheels 6, 7 can be kept clamped against the board. To have the possibility to keep the wheels fixed in the unfolded position the bars 8 have near their ends cross-bars 15, which are kept into two grooves 17, 18 by means of a spring 16. According to this embodiment of the invention, such a cart is very useful for transporting for example surf-boards from the car to the water. The tube 10 is the axis of pivotation.

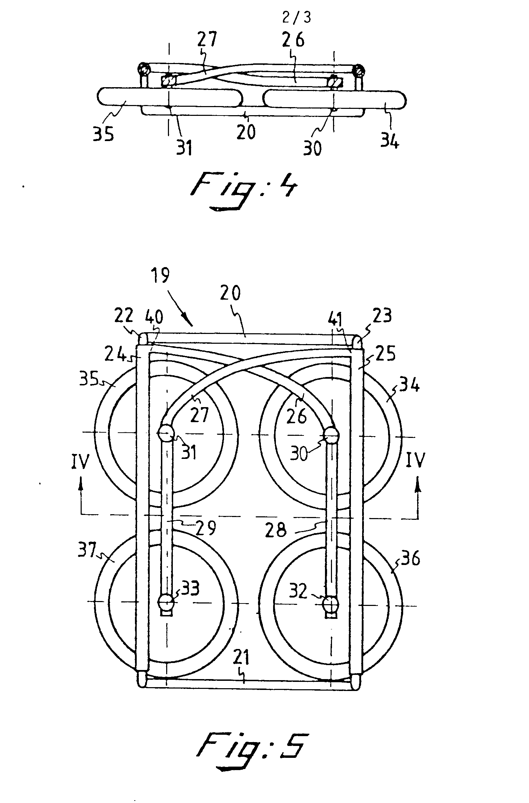

The Figures 4 and 5 show another embodiment of the invention. This embodiment shows an under-carriage with wheels which can be folded underneath. Figure 4 is a cross-sectional view taken along the line IV-IV of Figure 5; Figure 5 is a top view. The undercarriage exists of a frame 19, which is made out of two U-shaped bars 20, 21. Two straight bars 22, 23 connect the far ends of the legs of the U-shaped bars 20, 21. Around each of the straight bars 22, 23 are placed tubes 24, 25 which can freely pivot around the straight bars. Near one of the ends of each of the tubes 24, 25 is connected a bended bar 26, 27, for example welded. The bended bars 26, 27 have such a form, that the wheels can be folded underneath inside the framework. So the undercarriage can be folded together in a very little space.

Near one of the ends of each of the bended bars 26, 27 and interconnected by a connection-bar 18, 19 are connected to it the axles 30, 31 and 32, 33 of the wheels 34, 35 and other wheel outside the circumference of the first wheel.

According to a prefered embodiment of the cart, seen in the moving direction of the cart the fastening point or the pivoting point of one of the support members is situated before the wheels and the fastening point of pivoting point of the other supporting member is situated behind the wheels. With this embodiment is reached that both wheels can be pressed against the bottom of the frame without the supporting members of both wheels being in touch with each other.

In another embodiment of the cart according to the invention both pivoting or fastening points of both supporting members are situated before of behind the wheels. The supporting members are folded as the legs of a pair of spectacles. A cart according to this embodiment can't be folded so compact but has for the sake of appearances a much better looking.

According to another embodiment of the invention the cart can have four wheels if the axle of one of the two wheels is connected to the axle of a third wheel and the axle of the second wheel to the axle of a fourth wheel. Such a cart or under carriage can be used for a baby-carriage or -coach or such-like; such a baby-carriage for example is compost out of two parts, an under-carriage and an upper part, which can be placed upon the under-carriage,and of which according to the invention the under-carriage can be folded or unfolded.

The invention will now be described with reference to the accompanying drawings, in which:

Figure 1 is a side elevational view of a cart according to the invention with unfolded wheels,

Figure 2 is a side view of the cart of Figure 1, with the wheels folded underneath,

Figure 3 a bottom-view of the cart of Figures 1 and 2, whith the wheels folded underneath,

Figure 4 a side elevational view of another embodiment of a cart according to the invention,

Figure 5 a top view of the cart of Figure 4,

Figure 6 is a perspective view of another embodiment of a cart according to the invention,

Figure 7 bottom view of the cart of Figure 6, with 36, 37. In this embodiment the supporting members which interconnect the wheels with the frame are the bended bars 26, 27.

In the first embodiment of the invention shown in the Figures 1, 2 and 3 the connection point or pivoting point 38 of the supporting members 2 and the frame 1 is before (or behind respectivily) both wheels 6 and 7 and the connection point or pivoting point of the supporting member 3 and the frame 1 behind (or before respectivily) both wheels. This symmetrical embodiment of the cart according to the invention can be folded together in an easy way within a little space.

In the second embodiment, as shown in the Figures 4 and 5 the connection point or pivoting point 40 of the supporting members (the bended bars 26) of the wheels 34, 36 with the frame 19 and the connection point 41 of the supporting member (the bended bar 27) of the both other wheels 35 and 37 with the frame 19 are both behind of both before the wheels. This second embodiment of the undercarriage according to the invention can only in one possible way folded together into a little area; the bended bars 26 and 27 need both to be bended in a special way.

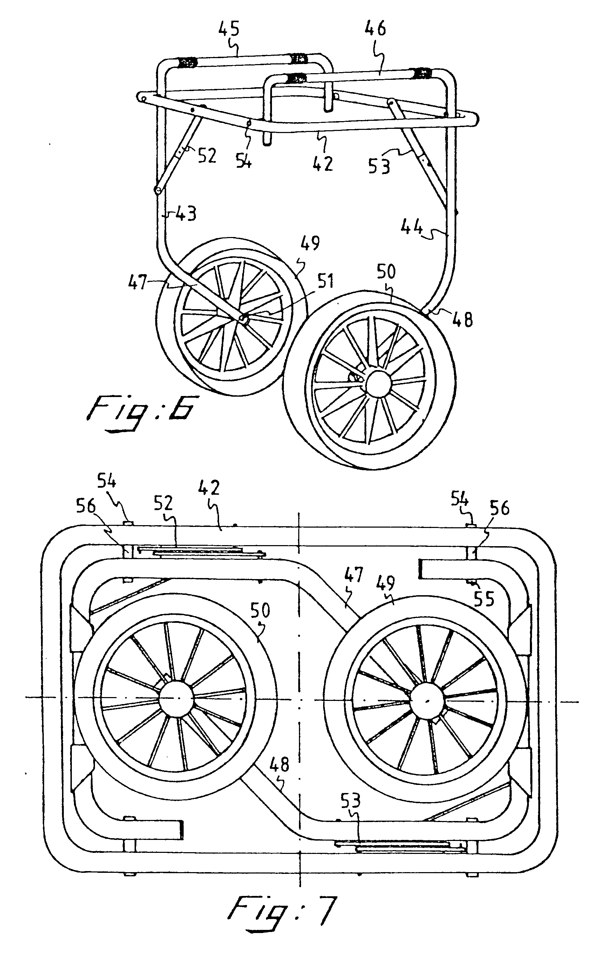

Referring to Figures 6 and 7 the cart comprises a rectangular frame 42 and two supporting members 43, 44 of tubular cross-section. The frame is formed of a rectangular bended tube. Each of the supporting members 43, 44 has an upper-section 45,46 which is U-shaped and of which both legs are pivotally fixed to the frame 42,and a lower section 47, 48 which is angled and to the lower end on an axis 51 is fixed a wheel 49, 50.

The two supporting members 43, 44 can be held in the unfolded position by means of a lockingdevice 52, 53. To keep the mutual distance between the supporting members 43, 44 and the frame 42 constant, the support members 43, 44 are connected to the frame 42 by means of bolts 54 and nuts 55 and in between are placed distance tubes 56.

This third embodiment of the cart according to the invention is very similar to the first embodiment shown in Figures 1, 2 and 3; the wheels 49 and 50 have a broad tread, thus a large bearing surface what makes that the wheels will easely run over the sands and is generally used to carry one or more surf-boards over the beach or sands into the water.

- 1 -

CLAIMS

1. Cart, baby-carriage, under carriage for a baby-coach of such-like, comprising a frame and two wheels, characterized in, that two support members connect the axis of rotation of the wheels to the frame and that each of the support members together with the wheel can pivot around an axis, which is in or nearby the plane of rotation of the wheel and that connecting means can keep the support members in one or more preferred positions and that in the unfolded position of the support members the axis of rotation of the wheels are in line and that in the unfolded position of one of the support members the other support member can be folded towards the unfolded position such that the support member of one of the wheels lays outside the circumference of the other wheel and the support member of the other wheel lays outside the circumference of the first wheel and that the distance between an axis of rotation of a wheel and the axis of pivotation of the support member is more than half the distance between the axis of pivotation of the two support members.

2. Cart according to claim 1, characterized in, that each support member has an upper-section which is U-shaped and of which both legs are pivotally fixed to the frame and a lower section which is angled and to the lower end is fixed the axis of a wheel.

3. Cart according to claim 1, characterized in, that each support member has an lower section which is angled and to the lower end of it is fixed on an axis a wheel and the other end of the support member is fixed to a tube which is the axis of pivotation of the support member.

4.    Cart according to claim 1,2 or 3, characterized in, that if the unfolded cart is moved in one direction the fastening point of pivoting point of one of the support members is situated before the wheel and the fastening point of the other supporting member is situated behind the wheel.

5.    Cart according to one of the claims 1, 2 or 3, characterized in, that the fastening points of both supporting members are situated before or behind the two wheels.

6.    Cart according to one of the claims 1, 2, 3, 4 or 5, characterized in, that the axle of one of the two wheels is connected to the axle of a third wheel and the axle of the second wheel to the axle of a fourth wheel.

Fig:1

Fig:2

Fig:3

27 26

35 20 34
31 30

*Fig:4*

19 20
22 40 41 23
24 25
35 34
27 26
31 30
IV IV
29 28
37 36
33 32
21

*Fig:5*

0028434

Fig:6

Fig:7

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A - 2 516 513 (OLSSON) <br> * Figures 1-5; page 6, lines 16-24; pages 7-11 * <br> & GB - A - 1 495 475 <br><br> -- <br><br> NL - A - 75 13895 (RIVIERA) <br> * Figures 1-6; page 2, lines 3-33; pages 3,4 * <br><br> -- <br><br> GB - A - 1 528 582 (BARNETT) <br> * Figures 1-5; page 1, lines 1-63 * <br><br> -- | 1 <br><br><br><br><br><br> 1 <br><br><br><br><br><br> 1 | B 62 B 1/12 <br> 3/02 |
| A | GB - A - 1 535 395 (FERNEAL) <br> * Figures 1-11; pages 1,2, lines 1-87 * <br><br> -- | 1 | **TECHNICAL FIELDS SEARCHED (Int. Cl.³)** <br><br> B 62 B <br> B 60 P |
| A | AU - A - 13 483/66 (WRIGHT) <br> * Figures 1-6; pages 2,3, lines 1-14 * <br><br> -- | 1 | |
| A | DE - A - 2 732 757 (FELS) <br> * Figures 1-8; pages 1,2 * <br><br> -- | 1 | **CATEGORY OF CITED DOCUMENTS** <br><br> X: particularly relevant <br> A: technological background <br> O: non-written disclosure <br> P: intermediate document <br> T: theory or principle underlying the invention |
| A | FR - A - 2 306 851 (CETEGE) <br> * Figure 1; page 5, lines 1-12 * <br> & GB - A - 1 499 776 <br><br> ---- | 1 | E: conflicting application <br> D: document cited in the application <br> L: citation for other reasons <br><br> &: member of the same patent family, corresponding document |

| ✓ | The present search report has been drawn up for all claims | | |
|---|---|---|---|
| Place of search <br> The Hague | Date of completion of the search <br> 16-02-1981 | Examiner <br> VANNESTE | |

EPO Form 1503.1 06.78